# EUROPEAN PATENT SPECIFICATION

(11) **EP 0 795 256 B1**
(45) Date of publication and mention of the grant of the patent: **29.08.2001**
(21) Application number: 95941059.8
(22) Date of filing: 28.11.1995
(51) Int. Cl.: H04Q 7/30, H04Q 7/24

(54) **A RADIO TELECOMMUNICATION SYSTEM**
FUNKKOMMUNIKATIONSSYSTEM
SYSTEME DE RADIOCOMMUNICATION

(30) Priority: 30.11.1994 EP 94203487
(43) Date of publication of application: 17.09.1997
(73) Proprietor: TELEFONAKTIEBOLAGET LM ERICSSON, 126 25 Stockholm (SE)
(72) Inventor: VAN DE BERG, Petrus, Hubertus, Gerardus, NL-1015 BK Amsterdam (NL); JAGER, Jan, NL-3602 XR Maarssen (NL); ÖSTERBERG, H kan, Ingemar, S-131 48 Nacka (SE); LINDQVIST, Stefan, Otto, S-161 32 Bromma (SE)
(74) Representative: Fieret, Johannes, Ir.
(86) International application number: EP9504716
(87) International publication number: WO9617484

(56) References cited:
- EP-A- 0 566 874
- EP-A- 0 617 522
- ERICSSON REVIEW, vol. 71, no. 2, 1 January 1994 STOCKHOLM SE, pages 84-92, XP 000460735 G M. CAMPBELL ET AL 'DCT 1800- A DECT Solution for Radio Access Application'
- COMMUTATION ET TRANSMISSION, vol. 15, no. 4, 1 January 1993 PARIS FR, pages 37-42, XP 000414671 D. COINTOT 'Tangara/RD: une solution économique pour réseaux ruraux'

## Description

### Field of the Invention

The present invention relates generally to telecommunication systems comprising a radio link connection between two or more telecommunication units and, more specifically, to telecommunication systems having a plurality of geographically spread fixed and/or mobile radio communication units.

### Background of the Invention

Wireless telecommunication systems, such as the well-known cellular mobile telephone systems and cordless telephone and data transmission systems, typically comprise mobile or portable radio subscriber units, a plurality of radio base stations, each providing a number of radio communication channels to a geographical area or cell defined by the operating ranges of the base station and the mobile radio unit, and a central interface unit (CIU) or central unit also called radio exchange (RE) or mobile telephone switching office (MTSO), to which the base stations are connected. The CIU is in turn coupled to a Public Switch Telephone Network (PSTN) or Integrated Services Digital Network (ISDN), in some cases via an intermediate Private (Automatic) Branch Exchange (P(A)BX), for completing transmissions, such as telephone calls, between mobile radio subscribers and landline subscribers.

The CIU (RE or MTSO) provides, in fact, a conversion or matching function between the access technology used at the radio site, i.e. the radio base stations and radio subscriber units, and the PSTN/ISDN or P(A)BX. The CIU and P(A)BX may be also an integral unit, called a wireless P(A)BX.

Cellular communication systems provide coverage over relatively wide areas, i.e. relatively large cells. First generation cellular mobile networks provide service to macrocells having a range from the base station to the cell boundary of 1 to 5 km, and large cells (5 to 35 km). Analogue cellular systems, such as designated AMPS, ETACS, NMT-450 and NMT-900 have been deployed throughout the world. Digital cellular systems are designated IS-54B in North America and the pan-European GSM system. These systems, and others, are described, for example, in the book titled "Cellular Radio Systems", by Balston et al., published by Artech House, Norwood, MA., 1993.

Cordless communication systems range from simple residential cordless telephones to business cordless systems capable of serving hundreds or even thousands of cordless communication units across (large) offices, production halls etc. The cordless communication systems have been developed for use in picocell (a few meters), nanocell (up to 10 m) and microcell (10 to 400 m) applications. Analogue cordless telephone systems are designated CT0, CT1 and CT1+. Digital cordless communication systems are designated CT2, CT2-CAI, CT3 and DECT (Digital European Cordless Telecommunications). Reference is made to a paper by C. Buckingham et al., "A Business Cordless PABX Telephone System on 800 MHz Based on the DECT Technology", IEEE Communications Magazine, 29(1991)January, p. 105-110.

A further type of public radio communication system is called Radio in the Local Loop (RLL). RLL provides a radio link to complete the final connection between residential subscribers and the local exchange of a PSTN/ISDN, for example.

Within the concept of RLL, two basic systems can be distinguished: Fixed RLL (FRLL) and Mobile RLL (MRLL). In a telephony FRLL system, for example, the subscriber is provided with an ordinary telephone socket, or multiple telephone lines for business subscribers, however connected to a radio transceiver, also called Fixed Access Unit (FAU) or Wireless Fixed Access Unit (WFAU). Via this FAU/WFAU a radio link is established with a so-called radio access unit, which is in turn coupled to a CIU providing access to the PSTN/ISDN. In the MRLL concept, the subscriber is provided with a portable cordless or mobile radio telephone handset, by which, via the radio access unit, access to the PSTN/ISDN can be established.

Mixed concepts are also possible, i.e. FRLL providing mobility in the subscriber premises, also called Cordless In The Home (CITH) and residential or neighbourhood mobility, also called Cordless In The Neighbourhood (CITN).

In the brochure titled "Digital cordless telephony and the Personal Communications revolution", by Ericsson Business Mobile Networks B.V., March 1994, a RLL system is disclosed based on the existing business cordless technologies, in particular operating according to the DECT standard. This very low power, high communication capacity system consists of a plurality of geographically spread (outdoor) radio base stations. Each radio base station providing service to remote telecommunication units in its coverage area, i.e. pico-, nano- or microcell. The various radio base stations are connected by a transmission link to a CIU, which is in turn coupled to a PSTN/ISDN.

In the article "Tangara/RD: une solution économique pour réseaux rurause", by D. Cointot, COMMUTATION ET TRANSMISSION, vol. 15, no. 4, 1 January 1993, Paris FR, pages 37-42, an RLL-system for connection to a PSTN is disclosed. However, no details are provided of the CIU or base station controller (URB) and its connection to the PSTN.

The communication handling capacity of both a base station and a CIU are, of course, limited. This means that only a limited number of radio communication channels can be provided simultaneously by one base station and that a limited number of subscribers can be handled by one RE. In order to cover extensive residential or metropolitan areas, a large number of geographically spread base stations and RE's have to be installed and maintained.

EP-A-0 617 522 adresses the problem of reducing the number of connection lines between a base station (BS) and a CIU, also called a Communication System (KS).

The building of an infrastructure, i.e. wiring, and maintenance of large numbers of geographically spread base stations and RE's can be rather costly. In particular for those systems, wherein the connection between the CIU and the PSTN/ISDN for each of the subscribers is provided by separate analogue 2-wire interfaces, or a common digital data interface wherein each of the subscribers is provided with a dedicated 64 kb/s data channel (also called B-channel), in accordance with the so-called Channel Associated Signalling (CAS) technique, for example. In both cases signalling is provided over the analogue line or within the B-channel.

In a practical DECT system, such as the Ericsson Freeset® system, up to 600 subscribers can be connected to one RE, i.e. 600 analogue 2-wire lines or a 40 Mb/s digital CAS data link between each CIU and the PSTN. In case of ISDN access, i.e. two B-channels and one 16 kb/s signalling channel (also called D-channel), the digital data link even has to carry 90 Mb/s.

Reference is made to the article "DCT 1800 - A DECT Solution for Radio Access Application", by G.M. Campbell et al., Ericsson Review, vol. 71, no. 2, 1 January 1994, Stockholm SE, pages 84-92.

In this prior art RLL system, wherein the geographical distance between the RE's and an exchange of the PSTN, for example, can amount up to several kilometres, the transmission costs will be one of the main cost drivers. Further, the high data rates required put a severe constraint at the available transmission media. It is, for example, questionable whether such high data rata can be economically supported by a radio link connection, such as a microwave radio link.

### Summary of the Invention

In view of the foregoing background, it is therefor, an object of the invention to provide a public wireless communication system addressing the problems of:
- minimising the need for cabling;
- minimising the transmission costs;
- flexibility with regard to the type of transmission medium;
- cost-effectiveness for centralized operation & maintenance;
- upgradeable to maximum capacity;
- fast and easy installation;
- high system reliability, and
- migration to future requirements (incl. different frequency bands).

It is in particular an object of the present invention to provide a Radio in the Local Loop (RLL) system.

These and other objects, advantages and features of the present invention are provided by a radio communication system of the type disclosed in the above-mentioned article by G.M. Campbell et al., comprising a plurality of geographically spread radio access units comprising transceiver means, antenna means and control means, operatively connected to provide a plurality of radio communication channels in directionally separated transmission sectors, for establishing radio link connections with a plurality of geographically spread remote radio communication units, said radio access unit having access to a public telecommunication network through a central interface unit, characterized in that said central interface unit comprising at least one central interface module having line termination units and/or digital trunk units for the connection of a central interface module to said public telecommunication network, wherein said central interface unit is positioned at or close to a public network exchange site, such that the connection of a central interface module to said public network can be provided using line termination units and/or digital trunk units of the or each central interface module on a communication channel associated basis and not requiring further concentration of digital or analogue connection lines.

The invention makes in an efficient manner use of the inherent concentrator function provided by the CIU. This can be understood as follows. In practice, telecommunication systems are designed with regard to the assumption that the subscribers will not communicate all at the same time. Accordingly, the number of radio communication channels which have to be supported by the CIU are considerably less compared to the number of subscribers. This implies that the transmission capacity needed between the radio access units and the corresponding CIU is less than the transmission capacity required between the CIU and the PSTN/ISDN.

This is best illustrated by returning to the above example of the Ericsson Freeset® DECT system. DECT is based on a Multi-Carrier (MC)/Time Division Multiple Access (TDMA)/Time Division Duplex (TDD) format for the radio communication between the remote units and the radio access units or base stations. With DECT, ten radio carriers are available. Each carrier is divided in the time domain into twenty-four 'time-slots'. Two time-slots are used to create a duplex speech channel, which results in twelve available speech channels at any of the ten radio carriers. Accordingly, the maximum number of communication channels per transceiver is limited to twelve. Thus, when using a radio access unit or a base station having just one transceiver, the maximum transmission capacity to be supported by the communication link between such radio access unit and the corresponding CIU corresponds to twelve communication channels of 64 kb/s, i.e. about 800 kb/s, which is considerable less than the digital link between the RE and the PSTN/ISDN as outlined above.

Transmission systems for the support of data rates in the order of magnitude of 1 - 2 Mb/s are in general available on all types of transmission media, such as twisted wire pairs, coaxial cable, fibre optic cable and radio links, over distances of several kilometres. In practice, this transmission capacity can be provided by existing public telecommunication networks, such as the PSTN or data networks, private telecommunication networks like Community Antenna Television (CATV) networks, and, of course, by dedicated transmission lines or networks such as the Ericsson MiniLink® system, which is a microwave radio transmission system having a transmission capacity of up to 8 Mb/s.

Accordingly, in the radio communication system of the present invention, by positioning the CIU geographically at or close to a public network exchange, the maximum transmission capacity over extending transmission lines is determined by the limited transmission capacity between the CIU and an associated radio access unit, which transmission capacity can be provided by a number of different and in most cases already available transmission systems. Accordingly, the present invention provides a great flexibility and cost effective solution with regard to the type of transmission medium for connecting the radio access units.

At present, the majority of exchanges of PSTN/ISDN networks supports analogue multi subscriber line connections or digital channel associated signalling interfaces. By the positioning of the central interface at or close to a network exchange, the radio communication system according to the present invention can be used with all existing network exchanges without a need for the development of new data transmission interfaces or the like. This is an important aspect in view of fast and easy installation of the system and contributes to a high system reliability because existing technologies can be used.

However, the connection between the CIU and the PSTN/ISDN is not limited to digital CAS and analogue multi line subscriber interfaces. The above advantages with regard to transmission capacity are also valid in case of high bit rate interfaces between the network exchange and the CIU based on the so-called digital Common Signalling Channel (CSC) technique. CSC supports a plurality of common transmission channels and a separate signalling channel.

In case of a RLL system build according to the invention, for providing radio access to an existing PSTN, which in general comprises a hierarchical structure of International, National, Regional and Local Exchanges or Switches, the CIU will in general be positioned at or close to a local exchange site. In a yet further embodiment of the invention, the CIU can be integral with a public network exchange, i.e. a local exchange but also a regional exchange, for example.

Although the CIU can be designed as a single unit, from a point of view of being upgradeable to maximum capacity, in a preferred embodiment of the invention the CIU is composed of a plurality of central interface modules. A further advantage of using a modular CIU is the provision of redundancy. In case of failures or the like, non-distorted interface modules can provide at least some or even the total transmission capacity required by a particular radio access unit or a number of radio access units.

The number of transmission links to the radio access units can be reduced by the reduction of the number of radio sites. In a further embodiment of the invention this is achieved by extending the service area or cell of the radio access units, such that transceiver and antenna means are operatively connected to provide a plurality of radio communication channels in directionally separated transmission sectors.

By limiting the available RF power of a transceiver means to a directionally limited geographical are, the effective range of the radio transmitter can be extended compared to omnidirectional coverage. By reciprocity, the same holds for the reception sensitivity of the receiver means.

In practice, the above embodiment provides concentration of the plurality of geographically spread radio access units or radio access modules in a limited number of concentrated access units. Reduction of the number of radio access units in the system reduces the number of separate transmission links, in most cases cabling, which contributes to a reduction of the overall transmission and installation costs, and improves the maintainability of the system.

A further reduction of the cabling costs can be achieved by connecting the several radio access modules to an intermediate concentrator unit, located at or close to a concentrated access unit, which concentrator unit provides in turn the connection with the CIU (i.e. RE or MTSO).

A further reduction of the transmission costs can be achieved, according to another embodiment of the invention, by including data coder-decoder means in the CIU and radio access units, such to reduce the data rate over the connecting data transmission link.

Audio or sound data streams in digital telephone communication systems generally comprise a plurality of digitized sound samples. The digital data are usually obtained by approximating the magnitude of the analog sound sample to a nearest reference level. A technique which is called quantization. In a process called Pulse Code Modulation (PCM) a digital code word comprising a number of data bits representing the reference level is generated as a digital representation of the analog sound sample. For telephony systems, the PCM data is transmitted at a rate of 64 kb/s.

For transmission purposes, this digital representation can be subjected to a further coding algorithm, such as Adaptive Differential Pulse Code Modulation (ADPCM), for example. ADPCM is a coding technique in which the difference between two consecutive PCM input values is quantized and encoded as ADPCM data words. The quantization process is dynamically adapted to the momentary average signal level.

In case of a telephone radio communication system according to the invention, operating under the DECT or CT2 standard, for example, PCM speech data to be transmitted over a radio communication channel is subjected to an ADPCM algorithm which results in a data transmission rate of 32 kb/s. This ADPCM algorithm is described in CCITT Recommendation G.726 (former G.721).

By using such ADPCM coder-decoder means at the data connection between the CIU and the radio access units, a significant reduction of the transmission capacity can be achieved.

A further reduction in the transmission capacity required between the CIU and the radio access units can be achieved, in accordance with a yet further embodiment of the invention, by providing the radio access units with means for the processing of those communication handling functions which are internal to said radio communication system. Such that all or a number of radio communication related functions, such as initialization of the system, handover, and the like are supported by the radio access units, such that the CIU mainly has to provide a concentrator function for the communication data towards and from the radio access units and the PSTN/ISDN, for example.

In such an arrangement, a transparent communication data transmission path between the public network and the radio communication system can be provided, which presents no bar in the migration to future functional (service) and/or frequency dependent requirements.

Positioning of the CIU's at or near the public network exchange sites allows also for a centralized Operations, Administration, Maintenance and Provisioning system (OAMP) having a communication link with each CIU.

The invention relates in particular to a radio in the Local Loop (RLL) system, comprising a plurality of geographically spread radio access units for establishing radio link connections with a plurality of geographically spread remote radio communication units, wherein the radio access units are connected to a public telecommunication network through a plurality of central interface units positioned at or close to a public network exchange, in particular a local exchange of the network.

The above-mentioned and other features and advantageous of the present invention are illustrated in the following description with reference to the enclosed drawings.

### Brief Description of the Drawings

Fig. 1 shows, in a schematic and illustrative manner, a known Radio in the Local Loop (RLL) telephone communication system.
Fig. 2 shows, schematically, an embodiment of a Central Interface Unit (CIU) used in the RLL system of Fig. 1.
Fig. 3 shows, schematically, an embodiment of a radio communication system according to the present invention, connected to an exchange of a public telecommunication network.

### Detailed Description of the Embodiments

Without the intention of a limitation, the invention will now be explained by an embodiment of a RLL telephone system operating under the DECT (Digital European Cordless Telecommunications) standard. DECT is the mandatory European standard for all digital cordless telecommunication systems, i.e. for use in business environments such as offices and in residential areas, such as RLL. Reference is made to the above-mentioned article by C. Buckingham et al.

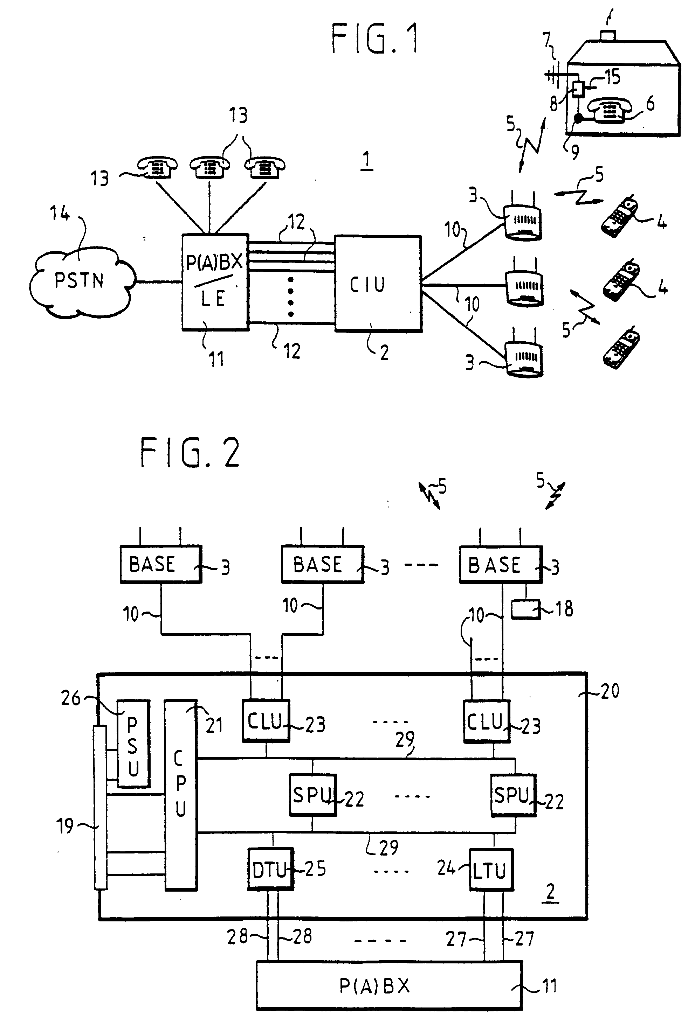

Fig. 1 illustrates a prior art DECT RLL system, generally designated with reference numeral 1, such as described in the above-mentioned brochure by Ericsson Business Mobile Networks B.V., based on the Ericsson Freeset® equipment. The system comprises four essential elements: a central interface unit (CIU) also called radio exchange (RE) 2; a plurality of compact radio base stations or radio access units 3, which are installed throughout the area to be covered and connect via data lines 10 directly to the CIU 2; cordless or wireless portable telephones or handsets 4; and so-called (Wireless) Fixed Access Units ((W)FAU) 8, installed in or at a house, office building and the like. The (W)FAU 8 connects to an antenna 7 and terminates in a fixed telephone terminal or socket 9, for the connection of an ordinary wired telephone 6. A handset 4 and (W)FAU 8 connect over a radio link 5 with a base station 3.

Generally, each base station 3, handset 4 and (W)FAU 8 comprise an air interface in the form of a transceiver unit, having a transmitter/modulator part and a receiver/demodulator part, both connected to at least one receive/transmit antenna. Further, transmission control and synchronization units are provided for establishing correct radio link transmissions. Received and transmitted speech information is processed under the control of a speech processing unit, to which one or several codecs are connected. In the handset 4 these codecs connect to a microphone and loudspeaker part at the user interface of the handset. Each base station 3, handset 4 and (W)FAU 8 are provided with central processing means for controlling the overall operation of the base station or handset.

The CIU 2 is connected, via lines 12, to a wired exchange 11 to which a plurality of wired telephones 13 can be connected. In business environments, this exchange 11 is generally a so-called Private (Automatic) Branch Exchange (P(A)BX) whereas in outdoor applications such as RLL, the exchange 11 is generally a Local Exchange (LE) which, like the P(A)BX, is connected to a Public Switched Telephone Network (PSTN) 14, i.e. the ordinary wired public telephone network.

The RLL system shown is of the so-called mixed type, i.e. providing Fixed (FRLL) via the (W)FAU 8 and Mobile RLL (MRLL) through the direct radio access between the handsets 4 and base stations 3, also called Cordless In The Neighbourhood (CITN). In practice, either one or both FRLL and MRLL may be provided, whereas the (W)FAU 8 may also comprise indoor antenna means 15, such to provide for so-called Cordless In the Home (CITH), i.e. cordless in-house telephone service. Reference is made to International Patent Application WO 94/19877.

By means of handovers from cell to cell, the handset users can roam within the service area of the system, while maintaining communication without degradation of quality. Built-in data encryption ensures privacy and secure communications. All functions that are available on a normal wired telephone 13 connected to the P(A)BX or LE 11 are also available on the handsets 4 or the telephone 6.

DECT is based on a Multi-Carrier (MC)/Time Division Multiple Access (TDMA)/Time Division Duplex (TDD) format for radio communication between the remote units such as a cordless telephone 4 or (W)FAU 8 and the base-stations 3. With DECT, ten radio carriers are available. Each carrier is divided in the time domain into twenty-four 'time-slots'. Two time-slots are used to create a duplex radio communication channel, effectively resulting in twelve available radio communication channels at any of the ten radio carriers. The twenty-four time slots are transmitted in so-called TDMA frames having a frame cycle time T_{F} of 10 ms. DECT operates at a frequency band of 1880-1900 MHz.

In the system shown, each base station 3 comprises a single transceiver, which can be switched to each of the available radio carriers. Accordingly, the maximum number of radio communication channels of a base station 3 is limited to twelve. The selection of a radio channel is based on the so-called Dynamic Channel Allocation (DCA) technique, in which a free radio communication channel amongst a plurality of radio communication channels common to all base stations 3 or cells of the system is selected. DCA requires no channel or frequency planning and the like, and optimizes the occupation of the available communication capacity of the system.

One of the basic features of the system is decentralized Continuous Dynamic Channel Selection (CDCS), a technique in which the handsets 4 or (W)FAU 8 selects the best available radio communication channel. With CDCS, channel selection is not limited to call set-up, but continues during the communication. CDCS optimizes the radio link quality between the handset 4 and base station 3 and the occupation of the available radio communication channels per cell. Reference is made to US Patents 4,628,152; 4,731,812 and a paper by D. Åkerberg, "Novel Radio Access Principles Useful for the Third Generation Mobile Radio Systems", The Third IEEE International Symposium on Personal, Indoor and Mobile Radio Communication, Boston Massachusetts, October 19-21, 1992.

Between the CIU 2 and the P(A)BX/LE 11 PCM data is processed at a rate of 64 kb/s. The PCM data is transcoded by Adaptive Differential Pulse Code Modulation (ADPCM), such that communication data over the air interface 5 is transmitted at a rate of 32 kb/s. DECT uses an ADPCM algorithm described in CCITT Recommendation G.726 (former G.721).

Fig. 2 shows a functional block diagram of an embodiment of the CIU 2, shown in Fig. 1. The CIU comprises a housing 20 containing a Central Processing Unit (CPU) 21, Speech Processing Units (SPU) 22, Cell Link Units (CLU) 23 and Line Termination Units (LTU) 24 and/or Digital Trunk Units (DTU) 25. The several units are connected to a digital system bus 29, and are powered by a Power Supply Unit (PSU) 26. Reference is made to Ericsson Technical Product Manual DCT 1800, EN/LZBNB 103 104 R3/1, by Ericsson Business Mobile Networks B.V.

The CPU 21 provides the overall control of the system and performs the tasks of system initialization, call processing and intra-system mobility management. System testing and fault recovery and system statistics information are also provided by the CPU 21, which information is available through an external interface 19.

The SPU's 22 form the communication data interface between the LTU's/DTU's 24/25 and the CLU's 23. Each SPU 22 contains a number of speech processing circuits, which handle each the speech processing of one call. When a call is initiated, either by a handset 4 and (W)FAU 8 or an incoming call is received via an LTU 24 or DTU 25, a speech processing circuit is assigned to the call. The main functions of an SPU are: PCM to ADPCM transcoding and vice versa, dial tone generation and detection, and echo control.

The CLU's 23 provide the communication interface between the SPU's 22 and the corresponding base station 3. Each CLU 23 contains a number of link circuits, and each link circuit communicates with one base station 3. The main functions of an CLU are: transmitting up to 12 communication channels simultaneously from the CIU 2 to a base station 3 over a data line 10, and providing synchronization and powering for the base station 3. The base station control, TDMA-frame generation and radio link maintenance functions are implemented in the base station, as described above. As indicated by reference numeral 18, the base stations 3 may also be powered locally, via an AC/DC adapter.

The LTU's 24 provide an analogue interface between the P(A)BX/LE 11 and the CPU 2. Each LTU 24 comprises a number of line termination circuits, each of which interfaces to the P(A)BX through a 2-wire analogue subscriber line 27. Every analogue line 27 is dedicated to a specific handset 4 or (W)FAU 8 (Fig. 1), i.e. a specific telephone number. The main tasks of an LTU are: to establish a physical connection between the P(A)BX/LE and the CIU, on/of hook detection, ring signal detection, and analogue to digital speech processing (PCM) and vice versa.

The DTU 25 provides a digital interface between the P(A)BX/LE and the CIU 2. Every DTU 25 contains a number of digital trunk circuits. Each digital trunk circuit supports a Channel Associated Signalling (CAS) interface. In the embodiment shown, each CAS interface provides thirty fixed 64 kb/s digital communication channels, to which thirty subscribers are assigned; i.e. a 2 Mb/s data line 28. Dependent on the type of the P(A)BX/LE 11, a number of the functions of an LTU may also have to be performed by a DTU.

In a practical embodiment of the CIU 2 described above, up to 600 subscribers can be connected to one CIU 2. This means that the connection 12 (Fig. 1) or 27/28 (Fig. 2) between the CIU 2 and the P(A)BX/LE 11 has to support up to 600 analogue 2-wire lines in case of LTU's 24, or a 40 Mb/s digital data link in case of DTU's 25. As described in the introductory part to the present application, these high data put severe constrains at the transmission links in the prior art RLL system, having distributed CIU's.

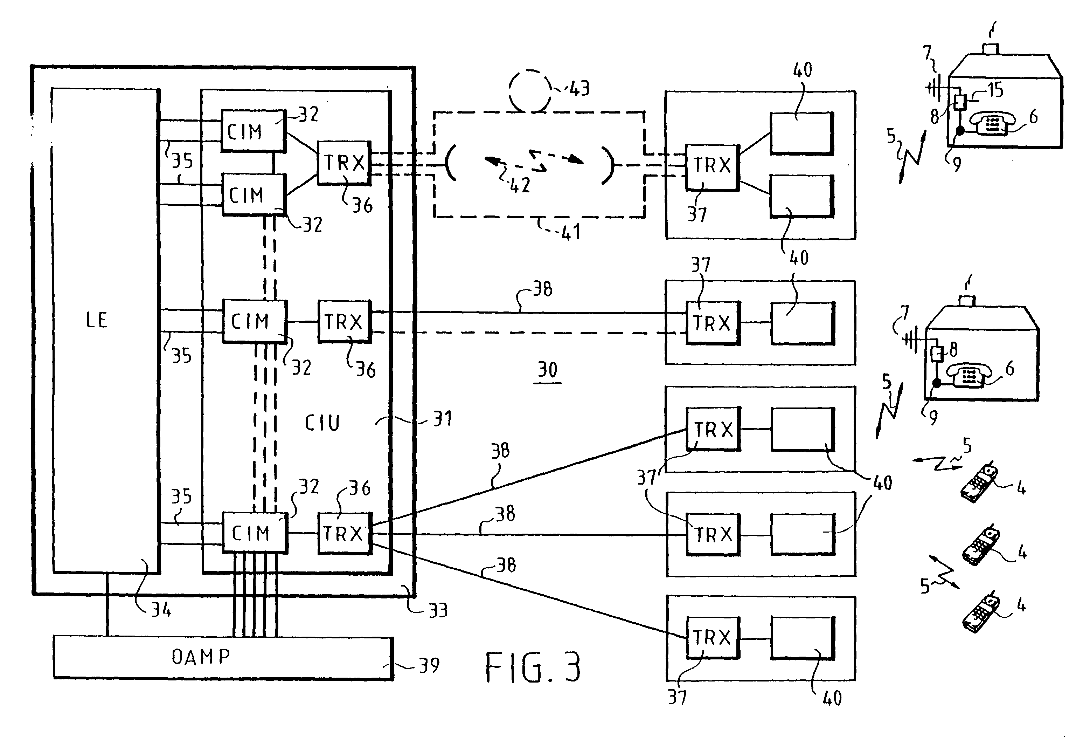

Fig. 3 shows an embodiment of the radio communication system according to the present invention, which is generally designated with the reference numeral 30. The system is based on the above described DECT equipment, and comprises a CIU 31 which, in this embodiment, consists of a number of Central Interface Modules (CIM) 32. The CIU 32 is geographically positioned at or close to a public network exchange site 33. In the embodiment shown, the CIU 31 is connected to a LE 34 of a public telephone network. The above term "at or close to" has to be construed in that the connection 35 between the LE 34 and the CIU 31 can be provided using DTU 25 and/or LTU 24 equipment as shown in Fig. 2, without a need for further concentration of digital data or analogue lines.

With reference to Figs. 2 and 3, in case of a radio communication system 30 constructed from base stations 3, the CIM 32 can be equivalent to a CIU 2. The data lines between the CIM 32 or, more generally, the CIU 31 have to support a maximum data rate of about 800 kb/s, i.e. maximum twelve communication channels of 64 kb/s each.

In the radio communication system shown in Fig. 3, instead of base stations 3, radio access units 40 are installed. Like the base stations 3, these radio access units 40 comprise transceiver means having a transmitter/modulator and receiver/demodulator unit, control and synchronization means and receive/transmit antenna means. These means are, however, operatively connected to provide the common radio communication channels in directionally separated transmission sectors.

In a practical embodiment, these radio access units 40 accommodate a number of radio access modules equivalent to the base stations 3. Each radio access module provides service to at least one transmission sector. Compared to a single base station 3, the radio access units 40 cover cells having a radius up to 2 km or even more. Grouping of base stations 3 into radio access units 40 reduces cabling and the like, compared to the system shown in Fig. 1.

With regard to the radio link connections 5 between handsets 4 or (W)FAU's 8 and the radio access units 40, the radio system 30 operates equivalent to the prior art system described above and shown in Fig. 1.

As described above, the data exchange rate over the radio links 5 amounts 32 kb/s. By incorporating the PCM/ADPCM transcoding function in the CIU 31, such as provided by the SPU 22 (Fig. 2), the data transmission rate per communication channel between the CIU 31 and the access units 40 is reduced from 64 kb/s to 32 kb/s, providing a transparent communication data transmission path between the CIU 31 and the handsets 4 and (W)FAU's 8. However, other coding/decoding algorithms and means may be used for the purpose of data rate reduction, such that the PCM/ADPCM transcoding may also be incorporated in the radio access units 40, i.e. the base stations 3.

In case of radio access units 40 comprising six base stations 3, for example, each providing service to a 120° transmission sector, i.e. two overlay omni-directional three-sector sites, such as described in the non-prepublished European patent application no. 94203335.8, the maximum data rate to be supported by the transmission link between the CIU 31 and a radio access unit 40 in case of a 32 kb/s communication data rate, amounts about 2.3 Mb/s. In practical embodiments, because not all of the radio communication channels will be used simultaneously, a 2 Mb/s data transmission capacity suffices. This transmission capacity can, in practice, be provided by a number of transmission media, such as twisted wire pairs or coaxial cable 41, radio (microwave) links 42 and optical fibre 43. Which may form part of existing networks, such as the PSTN/ISDN, cable television CATV systems and the like.

In the CIU 31 or the CIM 32, in case of such 2 Mb/s trunk lines 38, the CLU's 23 shown in Fig. 2, which support twisted wire pair links, are replaced by 2 Mb/s interfaces, such as provided by the DTU 25. In a practical embodiment interfaces in accordance with the CCITT G.703/704 standard are provided between the CIU 31 and the radio access units 40 and LE 34. As shown in Fig. 3, line driver units 36, 37 are provided. As illustrated in the upper part of the Fig. 3, these line driver units 36, 37 may also perform multiplex or concentrator functions, in case of concentrated radio access units 40 comprising a plurality of radio access modules for dense areas, for example. However, for redundancy purposes, both the number of trunk lines 38 and radio access modules in a radio access unit 40 can also be extended.

Positioning of the CIU 31 and LE 34 at one side, or near each other, facilitates centralized Operations, Administration, Maintenance and Provisioning (OAMP) of the complete system, such as illustrated by the OAMP unit 39.

In a further embodiment of the invention, several of the radio system, i.e. in the present example DECT, related functions such as system initialization, intra-system mobility management such as handovers in a cell, provided by the CPU 21 (Fig. 2) may be located in the radio access units 40, i.e. the line driver/multiplex unit 37, such that the function of the CIU 31 reduces to a concentrator/line termination unit. In such case, the transmission between the radio access units and the LE can be even further standardised, such as a V5.1 or V5.2 type standard digital interface.

Although the present invention has been described with reference to an existing DECT system, supporting CAS or analogue subscriber line connections with a P(A)BX or LE, the advantages obtained are also valid for Common Channel Signalling (CCS) supported connections between the CIU and a P(A)BX or LE or other network exchange. The invention is, of course, not limited to DECT, but can be used with other radio communication systems such as Frequency Division Multiple Access (FDMA) systems, for example CT2, or Code Division Multiple Access (CDMA) systems.

In the above description and the appended claims, the term 'public network' has to be construed as a telecommunication network comprising several, geographically spread exchange sites and users or subscribers. Such as the PSTN/ISDN, but also large private or community telecommunication networks.

## Claims

1. A radio communication system (30) comprising a plurality of geographically spread radio access units (40) comprising transceiver means, antenna means and control means, operatively connected to provide a plurality of radio communication channels in directionally separated transmission sectors, for establishing radio link connections (5) with a plurality of geographically spread remote radio communication units (4; 8), said radio access unit (40) having access to a public telecommunication network (14) through a central interface unit (31), **characterized in that** said central interface unit (31) comprising at least one central interface module (32) having line termination units (24) and/or digital trunk units (25) for the connection (35) of a central interface module (32) to said public telecommunication network (14), wherein said central interface unit (31) is positioned at or close to a public network exchange site (33), such that the connection (35) of a central interface module (32) to said public network (14) can be provided using line termination units (24) and/or digital trunk units (25) of the or each central interface module (32) on a communication channel associated basis and not requiring further concentration of digital or analogue connection lines (35).

2. A radio communication system (30) according to claim 1, wherein said connection (35) between said central interface unit (31) and said network exchange site (33) comprises a digital Channel Associated Signalling (CAS) connection (28).

3. A radio communication system (30) according to claim 1, wherein said connection (35) between said central interface unit (31) and said network exchange site (33) comprises a multi subscriber line connection (27).

4. A radio communication system (30) according to claim 1, wherein said connection (35) between said central interface unit (31) and said network exchange site (33) comprises a digital Common Signalling Channel (CSC) connection.

5. A radio communication system (30) according to any of the previous claims, wherein said network exchange site (33) is a local exchange (34) of the public switched telecommunication network.

6. A radio communication system (30) according to any of the previous claims, wherein said network exchange site (33) and central interface unit (31) are integral.

7. A radio communication system (30) according to any of the previous claims, wherein said central interface unit (31) is composed of a plurality of central interface modules (32) providing service to a plurality of radio access units (40).

8. A radio communication system (30) according to any of the previous claims, wherein said radio access units (40) comprise a number of radio access modules (3), each having radio transceiver means and control means arranged to provide a plurality of radio communication channels, wherein said radio access modules (3) are operatively connected to said antenna means for providing said communication channels in separate transmissions sectors.

9. A radio communication system (30) according to claim 8, wherein said radio access modules (3) are connected to the central interface unit (31) via a concentrator unit (37).

10. A radio communication system (30) according to any of the previous claims, wherein said central interface unit (31) and radio access units (40) comprise coder-decoder means (36, 37) for reducing the data between said central interface unit (31) and said radio access units (40).

11. A radio communication system (30) according to any of the previous claims, wherein said radio access units (40) comprise means (37) for the processing of communication handling functions internal to said radio communication system (30), and wherein said central interface unit (31) comprises interface means (35) for providing coupling to said central interface unit (31), which central interface unit (31) is arranged to provide a concentrator function.

12. A radio communication system (30) according to claim 11, wherein said interface means (37) of said radio access units (40) and said central interface unit (31) are arranged to provide a transparent communication data transmission path between said public network exchange site (33) and said radio access units (40).

13. A radio communication system (30) according to any of the previous claims, wherein said radio access units (40) and remote radio communication units (4; 8) comprise transceiver means, arranged to provide a plurality of radio communication channels in accordance with a multiple radio access technique.

14. A radio communication system (30) according to claim 13, wherein said transceiver means operate in accordance with the Digital Enhanced Cordless Telecommunications (DECT) standard.

15. A radio communication system (30) according to claim 13 or 14, dependent on claim 10, wherein said coding means operate in accordance with an Adaptive Differential Pulse Code Modulation (ADPCM) technique.

16. A radio communication system (30) according to any of the previous claims, further comprising an Operations, Administration, Maintenance and Provisioning System (OAMP) (39) having a communication link with each central interface module (32).

17. A radio communication system (30) according to any of the previous claims, wherein the connection (38) between said radio access units (40) and central interface unit (31) forms part of a group of transmission media consisting of twisted wire pairs, coaxial cable (41) fibre optic cable (43) and radio links (42).

18. A radio communication system (30) according claim 17, wherein said transmission media form part of a group of transmission networks consisting of public telecommunication networks, private telecommunication networks and dedicated transmission networks.

19. The use of a radio communication system according to any of the previous claims as a Radio in a Local Loop (RLL) system.

## Patentansprüche

1. Funkkommunikationssystem (30) mit mehreren geographisch verteilten Funkzugangseinheiten (40) mit einer Transceiver-Vorrichtung, einer Antennenvorrichtung und einer Steuervorrichtung, die betriebsgemäß zum Bereitstellen mehrerer Funkkommunikationskanäle in richtungsmäßig getrennten Übertragungssektoren verbunden sind, zum Einrichten von Funkverbindungen (5) zu mehreren geographisch verteilten Fernfunkkommunikationseinheiten (4; 8), wobei die Funkzugangseinheit (40) Zugang zu einem öffentlichen Telekommunikationsnetz (14) über eine zentrale Schnittstelleneinheit (31) hat,
**dadurch gekennzeichnet, dass**
die zentrale Schnittstelleneinheit (31) mindestens ein zentrales Schnittstellenmodul (32) enthält, mit Leitungsabschlusseinheiten (24) und/oder digitalen Kanaleinheiten (25) für die Verbindung (35) eines zentralen Schnittstellenmoduls (32) mit dem öffentlichen Telekommunikationsnetz (14), derart, dass die zentrale Schnittstelleneinheit (31) bei oder nahe einem öffentlichen Netzvermittlungsort (33) positioniert ist, so dass die Verbindung (35) eines zentralen Schnittstellenmoduls (32) mit dem öffentlichen Netz (14) unter Verwendung von Leitungsabschlusseinheiten (24) bereitgestellt werden kann und/oder von digitalen Kanaleinheiten (25) des oder jedes zentralen Schnittstellenmoduls (32), auf der Grundlage eines zugeordneten Kommunikationskanals, und dass keine weitergehende Konzentration digitaler oder analoger Verbindungsleitungen (35) erforderlich ist.

2. Funkkommunikationssystem (30) nach Anspruch 1, wobei
die Verbindung (35) zwischen der zentralen Schnittstelleneinheit (31) und der Netzvermittlungsstelle (33) eine kanalzugeordnete Signalgebungs(CAS)verbindung (28) enthält.

3. Funkkommunikationssystem (30) nach Anspruch 1, wobei
die Verbindung (35) zwischen der zentralen Schnittstelleneinheit (31) und der Netzvermittlungsstelle (33) eine Mehrfachteilnehmer-Leitungsverbindung (27) enthält.

4. Funkkommunikationssystem (30) nach Anspruch 1, wobei
die Verbindung (35) zwischen der zentralen Schnittstelleneinheit (31) und der Netzvermittlungsstelle (33) eine Verbindung für einen digitalen gemeinsamen Signalgebungskanal (CSC) enthält.

5. Funkkommunikationssystem (30) nach einem der vorangehenden Ansprüche, wobei
die Netzvermittlungsstelle (33) eine lokale Vermittlung (34) des öffentlichen Fernsprechwählnetzes ist.

6. Funkkommunikationssystem (30) nach einem der vorangehenden Ansprüche, wobei
die Netzvermittlungsstelle (33) und die zentrale Schnittstelleneinheit (31) integriert sind.

7. Funkkommunikationssystem (30) nach einem der vorangehenden Ansprüche, wobei die zentrale Schnittstelleneinheit (31) aus mehreren zentralen Schnittstellenmodulen (32) besteht,
die Dienste für eine vielzahl von Funkzugangseinheiten (40) bereitstellen.

8. Funkkommunikationssystem (30) nach einem der vorangehenden Ansprüche, wobei
die Funkzugangseinheiten (40) eine Zahl von Funkzugangsmodulen (3) enthalten, jeweils mit einer Funk-Transceiver-Vorrichtung und einer Steuervorrichtung ausgebildet zum Bereitstellen mehrerer Funkkommunikationskanäle, wobei die Funkzugangsmodule (3) betriebsgemäß mit der Antennenvorrichtung verbunden sind, zum Bereitstellen der Kommunikationskanäle für getrennte Übertragungssektoren.

9. Funkkommunikationssystem (30) nach Anspruch 8,
wobei die Funkzugangsmodule (3) mit der zentralen Schnittstelleneinheit (31) über eine Konzentratoreinheit (37) verbunden sind.

10. Funkkommunikationssystem (30) nach einem der vorangehenden Ansprüche, wobei
die zentrale Schnittstelleneinheit (31) und die Funkzugangseinheiten (40) Coder-/Decoder-Vorrichtungen (36, 37) enthalten, zum Reduzieren der Daten zwischen der zentralen Schnittstelleneinheit (31) und der Funkzugangseinheiten (40).

11. Funkkommunikationssystem (30) nach einem der vorangehenden Ansprüche, wobei
die Funkzugangseinheiten (40) eine Vorrichtung (37) zum Verarbeiten der Kommunikationshandhabungsfunktionen innerhalb des Funkkommunikationssystem (30) enthalten, und wobei die zentrale Schnittstelleneinheit (31) eine Schnittstellenvorrichtung (36) enthält, zum Bereitstellen einer Kopplung zu der zentralen Schnittstelleneinheit (31), derart, dass die zentrale Schnittstelleneinheit (31) zum Bereitstellen einer Konzentratorfunktion ausgebildet ist.

12. Funkkommunikationssystem (30) nach Anspruch 11,
wobei die Schnittstellenvorrichtung (37) der Funkzugangseinheiten (40) und die zentrale Schnittstelleneinheit (31) zum Bereitstellen eines transparenten Kommunikationsdaten-Übertragungspfads zwischen der öffentlichen Netzvermittlungsstelle (33) und den Funkzugangseinheiten (40) ausgebildet sind.

13. Funkkommunikationssystem (30) nach einem der vorangehenden Ansprüche, wobei
die Funkzugangseinheiten (40) und die Fernfunkkommunikationseinheiten (4; 8) eine Transceiver-Vorrichtung enthalten, ausgebildet zum Bereitstellen mehrerer Funkkommunikationskanäle in Übereinstimmung mit einer Mehrfachfunk-Zugangstechnik.

14. Funkkommunikationssystem (30) nach Anspruch 13,
wobei die Transceiver-Vorrichtung betriebsgemäß in Übereinstimmung mit dem digitalen, verbesserten, schnurlosen Telekommunikationsstandard (DECT) arbeiten.

15. Funkkommunikationssystem (30) nach Anspruch 13 oder 14, rückbezogen auf Anspruch 10, wobei
die Codiervorrichtung in Übereinstimmung mit einer adaptiven Differenzpulscode-Modulationstechnik (ADPCM) arbeiten.

16. Funkkommunikationssystem (30) nach einem der vorangehenden Ansprüche, wobei es ferner ein Betriebs-, Verwaltungs-, Wartungs- und Bereitstellungssystem (OAMP) (39) mit einer Kommunikationsverbindung mit jedem zentralen Schnittstellenmodul (32) enthält.

17. Funkkommunikationssystem (30) nach einem der vorangehenden Ansprüche, wobei
die Verbindung (38) zwischen den Funkzugangseinheiten (40) und der zentralen Schnittstelleneinheit (31) Teil einer Gruppe von Übertragungsmedien ist, bestehend aus verdrillten Drahtpaaren, Koaxialkabel (41), Lichtleitfaserkabel (43) und Funkverbindungen (42).

18. Funkkommunikationssystem (30) nach Anspruch 17,
wobei die Übertragungsmedien Teil einer Gruppe von Übertragungsnetzen sind, bestehend aus öffentlichen Telekommunikationsnetzen, privaten Telekommunikationsnetzen und zugeordneten Kommunikationsnetzen.

19. Verwendung eines Funkkommunikationssystems nach einem der vorangehenden Ansprüche als Funksystemin einem Amtsleitungssystem (RLL).

## Revendications

1. Système de radiocommunications (30) comprenant une pluralité d'unités radio géographiquement réparties (40) comprenant un moyen formant émetteur-récepteur, un moyen formant antenne et un moyen de commande, reliés de manière opérationnelle pour définir une pluralité de voies de radiocommunications dans des secteurs d'émission distincts d'un point de vue directionnel, pour établir des connexions de liaison radio (5) avec une pluralité d'unités de radiocommunications distantes géographiquement réparties (4 ; 8), ladite unité d'accès radio (40) ayant accès à un réseau public de télécommunications (14) par l'intermédiaire d'une unité centrale d'interface (31), **caractérisé en ce que** ladite unité centrale d'interface (31) comprend au moins un module central d'interface (32) ayant des unités de terminaison de ligne (24) et/ou des unités numériques d'artère téléphonique (25) pour la connexion (35) d'un module central d'interface (32) audit réseau public de télécommunications (14), dans lequel ladite unité centrale d'interface (31) est positionnée au voisinage ou au niveau d'un central téléphonique de réseau public (33) de sorte que la connexion (35) d'un module central d'interface (32) audit réseau public (14) peut être réalisée en utilisant des unités de terminaison de ligne (24) et/ou des unités numériques d'artère téléphonique (25) du module ou de chaque module central d'interface (32) sur une base voie de communication par voie de communication et ne nécessitant pas une concentration supplémentaire de lignes de connexion numériques ou analogiques (35).

2. Système de radiocommunications (30) selon la revendication 1, dans lequel ladite connexion (35) entre ladite unité centrale d'interface (31) et ledit central téléphonique de réseau public (33) comprend une connexion de signalisation numérique voie par voie (CAS) (28).

3. Système de radiocommunications (30) selon la revendication 1, dans lequel ladite connexion (35) entre ladite unité centrale d'interface (31) et ledit central téléphonique de réseau public (33) comprend une connexion de ligne multi-abonnés (27).

4. Système de radiocommunications (30) selon la revendication 1, dans lequel ladite connexion (35) entre ladite unité centrale d'interface (31) et ledit central téléphonique de réseau public (33) comprend une connexion de voie de signalisation commune numérique (CSC).

5. Système de radiocommunications (30) selon l'une quelconque des revendications précédentes, dans lequel ledit central téléphonique de réseau public (33) est un central local (34) du réseau public commuté de télécommunications.

6. Système de radiocommunications (30) selon l'une quelconque des revendications précédentes, dans lequel ledit central téléphonique de réseau public (33) et une unité centrale d'interface (31) sont d'un seul tenant.

7. Système de radiocommunications (30) selon l'une quelconque des revendications précédentes, dans lequel ladite unité centrale d'interface (31) est constituée d'une pluralité de modules centraux d'interface (32) procurant un service à une pluralité d'unités d'accès radio (40).

8. Système de radiocommunications (30) selon l'une quelconque des revendications précédentes, dans lequel lesdites unités d'accès radio (40) comprennent un certain nombre de modules d'accès radio (3), chacun ayant un moyen formant émetteur-récepteur et un moyen de commande conçus pour définir une pluralité de voies de radiocommunications, dans lequel lesdits modules d'accès radio (3) sont reliés de manière opérationnelle audit moyen formant antenne pour définir lesdites voies de communication en secteurs d'émission distincts.

9. Système de radiocommunications (30) selon la revendication 8, dans lequel lesdits modules d'accès radio (3) sont reliés à l'unité centrale d'interface (31) par l'intermédiaire d'une unité formant concentrateur (37).

10. Système de radiocommunications (30) selon l'une quelconque des revendications précédentes, dans lequel ladite unité centrale d'interface (31) et lesdites unités d'accès radio (40) comprennent un moyen formant codeur-décodeur (36, 37) pour réduire les données entre ladite unité centrale d'interface (31) et lesdites unités d'accès radio (40).

11. Système de radiocommunications (30) selon l'une quelconque des revendications précédentes, dans lequel lesdites unités d'accès radio (40) comprennent un moyen (37) pour le traitement de fonctions de gestion de communication internes audit système de radiocommunications (30), et dans lequel ladite unité centrale d'interface (31) comprend un moyen d'interface (36) pour réaliser un couplage avec ladite unité centrale d'interface (31), laquelle unité centrale d'interface (31) est conçue pour réaliser une fonction de concentrateur.

12. Système de radiocommunications (30) selon la revendication 11, dans lequel lesdits moyens d'interface (37) desdites unités d'accès radio (40) et de ladite unité centrale d'interface (31) sont conçus pour définir un chemin transparent de transmission de données de communication entre ledit central téléphonique de réseau public (33) et lesdites unités d'accès radio (40).

13. Système de radiocommunications (30) selon l'une quelconque des revendications précédentes, dans lequel lesdites unités d'accès radio (40) et les unités distantes de radiocommunications (4 ; 8) comprennent un moyen formant émetteur-récepteur, conçu pour définir une pluralité de voies de radiocommunications selon une technique d'accès radio multiple.

14. Système de radiocommunications (30) selon la revendication 13, dans lequel ledit moyen formant émetteur-récepteur fonctionne selon le standard de télécommunications numériques sans fil améliorées (DECT).

15. Système de radiocommunications (30) selon la revendication 13 ou 14, dépendante de la revendication 10, dans lequel ledit moyen de codage fonctionne selon une technique de modulation différentielle adaptative par codage d'impulsions (ADPCM).

16. Système de radiocommunications (30) selon l'une quelconque des revendications précédentes, comprenant de plus un système de fonctionnement, d'administration, d'entretien et de fourniture (OAMP) (39) ayant une liaison de communication avec chaque module central d'interface (32).

17. Système de radiocommunications (30) selon l'une quelconque des revendications précédentes, dans lequel la connexion (38) entre lesdites unités d'accès radio (40) et l'unité centrale d'interface (31) forme partie d'un groupe de supports de transmission constitué de paires torsadées, de câble coaxial (41), de câble à fibres optiques (43) et de liaisons radio (42).

18. Système de radiocommunications (30) selon la revendication 17, dans lequel lesdits supports de transmission forment une partie d'un groupe de réseaux de transmission constitué des réseaux publics de télécommunications, des réseaux privés de télécommunications et des réseaux dédiés de transmission.

19. Utilisation d'un système de radiocommunications selon l'une quelconque des revendications précédentes en tant que radio dans un système de boucle locale (RLL).
